# EUROPÄISCHE PATENTSCHRIFT

(11) **EP 1 384 763 B1**
(45) Veröffentlichungstag und Bekanntmachung des Hinweises auf die Patenterteilung: **06.12.2006**
(21) Anmeldenummer: 03014683.1
(22) Anmeldetag: 27.06.2003
(51) Int. Cl.: C09D 11/16

(54) **Verbesserte Markierungsflüssigkeiten**
Improved marking fluid
Liquide de marquage amélioré

(30) Priorität: 26.07.2002 DE 10234191
(43) Veröffentlichungstag der Anmeldung: 28.01.2004
(73) Patentinhaber: Südzucker Aktiengesellschaft Mannheim/Ochsenfurt, 68165 Mannheim (DE)
(72) Erfinder: Bernard, Jörg, Dr., 67283 Albsheim (DE); Kowalczyk, Jörg, Dr., 67304 Eisenberg/Steinborn (DE); Scherrer, Hans, 67308 Lautersheim (DE)
(74) Vertreter: Schrell, Andreas

(56) Entgegenhaltungen:
- EP-A- 1 036 833
- DE-A- 2 441 823
- DE-B- 2 315 680
- DE-C- 4 020 900
- US-A- 5 486 550

## Beschreibung

Die vorliegende Erfindung betrifft eine verbesserte Markierungsflüssigkeit sowie ein Verfahren zu deren Herstellung.

In Markierungstinten oder Textmarkern werden üblicherweise wasserlösliche Farbstoffe verwendet, die im alkalischen Milieu fluoreszieren. Ein solcher Farbstoff ist beispielsweise in der DE-PS 23 15 680 beschrieben (Hydroxypyrentrisulfonsäure (Solvent Green 7 C.I. 59040)). Dieser auch als Pyranin bezeichnete Farbstoff kann verwendet werden, um in Texten bestimmte Abschnitte durch Überstreichen deutlich hervorzuheben. Die Flüssigkeit weist den Vorteil auf, dass die mit ihr auf einer Unterlage erzeugte Markierung aufgrund des Tagesleuchtfarbencharakters farbintensiv ist. Darüber hinaus tritt die Farbwirkung sofort nach ihrem Auftragen ein. Ein Nachteil dieser Tinten ist jedoch in ihrer ungenügenden Lichtbeständigkeit zu sehen. In der DE-OS 24 41 823 wird vorgeschlagen, das oxidative Ausbleichen der Farbstoffe, bewirkt durch den Sauerstoff der Luft, durch reduzierend wirkende Stoffe zu eliminieren. Aus der DE 40 20 900 C1 gehen Markierungsflüssigkeiten hervor, die Saccharose, Lactose, Maltose oder davon abgeleitete Monosaccharide enthalten. Durch diese Maßnahme soll eine Verbesserung der Lichtbeständigkeit erzielt werden. Als problematisch bei dieser Lösung erweist sich jedoch, dass die auf Papier aufgebrachten Markierungstinten recht zügig eine braune Färbung annehmen. Dies beruht möglicherweise darauf, dass sich ausbildende Saccharosekristalle vom Farbstoff getrennt werden und diese daher den Farbstoff nicht mehr schützend umschließen.

Das der vorliegenden Erfindung zugrunde liegende technische Problem liegt also darin, Markierungsflüssigkeiten und Verfahren zu ihrer Herstellung bereitzustellen, die eine verbesserte Lichtechtheit und Leuchtkraft des in der Flüssigkeit vorhandenen Markierungsstoffes gewährleisten, ohne dass sich nach Aufbringen der Markierungsflüssigkeit auf Unterlagen Farbverschlechterungen einstellen.

Die vorliegende Erfindung löst dieses technische Problem durch die Bereitstellung einer Markierungsflüssigkeit, umfassend mindestens eine Hydroxypyrentrisulfonsäure oder ein Derivat davon und mindestens einen Zucker oder Zuckeralkohol, ausgewählt aus der Gruppe bestehend aus Palatinose, Trehalose, Trehalulose, 6-O-α-D-Glucopyranosyl-D-sorbit, 1-O-α-D-Glucopyranosyl-D-mannit und Maltit.

Überraschenderweise wurde gefunden, dass einer oder mehrere der vorgenannten Zucker oder Zuckeralkohole bei Verwendung in Hydroxypyrentrisulfonsäurebasierten Markierungsflüssigkeiten die Lichtechtheit und Leuchtkraft des Farbstoffes wesentlich verbessern, ohne dass sich die Markierung braun verfärbt.

Die genannten Zucker und Zuckeralkohole sowie ihre Mischungen lassen sich zum Beispiel durch eine enzymatische Umlagerungsreaktion gegebenenfalls gefolgt von einer Hydrierung zur Herstellung von Zuckeralkoholen wie sie in der EP 0 625 578 B1 beschrieben ist, aus Saccharose einfach und kostengünstig sowie umweltschonend herstellen. Hinsichtlich der Bereitstellung und Zusammensetzung der genannten Zucker und Zuckeralkohole sowie Zucker/Zuckeralkoholgemische wird der Offenbarungsgehalt der EP 0 625 578 B1 vollständig in den Offenbarungsgehalt der vorliegenden Lehre mit einbezogen. In einer bevorzugten Ausführungsform der vorliegenden Erfindung ist die Markierungsflüssigkeit frei von Saccharose, Lactose, Galaktose, Maltose, Glucose und/oder Fructose.

In einer bevorzugten Ausführungsform betrifft die vorliegende Erfindung eine vorgenannte Markierungsflüssigkeit, wobei der eingesetzte Zucker Palatinose ist. Hierdurch wird eine besonders ausgeprägte Verbesserung der Lichtbeständigkeit und Leuchtkraft erzielt.

In einer besonders bevorzugten Ausführungsform ist vorgesehen, als Zucker oder Zuckeralkohol ein Gemisch der genannten Zucker oder Zuckeralkohole einzusetzen, insbesondere ein Gemisch von 1,6-GPS und 1,1-GPM. Ein derartiges Gemisch kann beispielsweise ein äquimolares Gemisch, also Isomalt oder Palatinit^{®} sein. Selbstverständlich kann auch vorgesehen sein, Gemische zu verwenden, die an 1,6-GPS oder an 1,1-GPM angereichert sind, das heißt Gemische einzusetzen, die 100 % 1,6-GPS und 1,1-GPM enthalten, wobei entweder 1,6-GPS in größerer Menge als 1,1-GPM oder 1,1-GPM in größerer Menge als 1,6-GPS vorhanden ist. Gegebenenfalls kann auch vorgesehen sein, dass zusätzlich zu diesen beiden Zuckeralkoholen 1-O-α-D-Glucopyranosyl-D-sorbit (1,1-GPS) und/oder Mannit, Sorbit, hydrierte oder nichthydrierte Zuckeralkohloligomere vorhanden sind.

Die Erfindung betrifft in einer weiteren Ausführungsform eine vorgenannte Markierungsflüssigkeit, die als wässrige Lösung ausgeführt ist und bevorzugterweise einen alkalischen pH-Wert, insbesondere von 8 bis 14, vorzugsweise 9 bis 11, besonders bevorzugt 9 bis 10, aufweist. Zum Einstellen und Aufrechterhalten des pH-Wertes werden der Markierungsflüssigkeit vorzugsweise Puffersubstanzen hinzugegeben, beispielsweise Natriumcitrat, Trishydroxymethylaminomethan, Natriumcarbonat, Natriumhydroxyd und/oder ähnlich wirkende Puffersubstanzen.

Im Zusammenhang mit der vorliegenden Erfindung wird unter der Hydroxypyrentrisulfonsäure 3-Oxy-pyren-5,8,10-trisulfonsäure oder deren Salz, insbesondere Natriumsalz (Pyranin) verstanden. Die Erfindung erfasst selbstverständlich auch Derivate dieser Säure oder des Salzes, sofern sie als Tagesleuchtfarben geeignet sind.

Selbstverständlich kann die erfindungsgemäße Markierungsflüssigkeit weitere fluoreszierende oder nichtfluoreszierende Farbstoffe enthalten, die beispielsweise die Farbabtönung, Lichtechtheit oder Farbkraft beeinflussen. Derartige Farbstoffe können bevorzugt Reactive Green 21, Direct blue 199, Basic Violet 10, Basic red 1 oder Siriuslichttürkisblau sein.

In einer weiteren bevorzugten Ausführungsform kann die Markierungslösung vorteilhafterweise ein Feuchthaltemittel enthalten, damit die Markierungsflüssigkeit in der Spitze der Auftragsvorrichtung nicht eintrocknet. Ein derartiges Feuchthaltemittel können Glycole, beispielsweise Diglycol, zum Beispiel Diethylenglycol oder Harnstoff sein.

In einer weiteren bevorzugten Ausführungsform weist die Markierungsflüssigkeit ein Konservierungsmittel auf, um schädliche mikrobielle Einflüsse zu reduzieren oder zu eliminieren. Derartige Konservierungsmittel können beispielsweise Isothiazolinolderivate wie 1,2-Benzothialozin-3-on-lithiumsalz oder N'-Dodecyl-N-3-aminopropylglycin sein.

In einer weiteren Ausführungsform kann bevorzugterweise vorgesehen sein, dass beispielsweise das Fließverhalten der Markierungsflüssigkeit durch modifizierende Zusätze wie oberflächenaktive Substanzen, zum Beispiel Tenside und/oder wasserlösliche Bindemittel, zum Beispiel ölfreie Alkydharze, vorhanden sind.

Die erfindungsgemäße Flüssigkeit kann in einer Ausführungsform auch reduzierende Agentien aufweisen, zum Beispiel Hydrazin, dessen Salze, Hydroxylamin, dessen Salze, Natriumsulfit, Natriumhydrogensulfit, Natriumdithionit, Rongalit oder Glyoxal-Natriumbisulfit.

In einer weiteren bevorzugten Ausführungsform ist vorgesehen, dass der Gehalt von Zucker und/oder Zuckeralkohol 5 bis 50 Gew.-% beträgt, bezogen auf das Gesamtflüssiggewicht der Markierungsflüssigkeit. In einer weiteren bevorzugten Ausführungsform der vorliegenden Erfindung ist vorgesehen, dass der Gehalt des Pyranins an dem Gesamtflüssiggewicht der Markierungsflüssigkeit 0,5 bis 8 Gew.-%, vorzugsweise 0,5 bis 3,0 Gew.-% beträgt.

Die vorliegende Erfindung betrifft auch Verfahren zur Herstellung der vorgenannten Markierungsflüssigkeiten. Erfindungsgemäß ist vorgesehen, zunächst eine wässrige, alkalische Farbstoffmischung herzustellen, die alle Substanzen außer den Zuckern und Zuckeralkoholen enthält, also den Farbstoff Pyranin, Wasser, gegebenenfalls mindestens ein Konservierungsmittel, gegebenenfalls die Puffersubstanz und gegebenenfalls das Feuchthaltemittel. In diese wässrige alkalische Lösung wird der Zucker oder Zuckeralkohol entweder in trockener Form oder in hochkonzentrierter Lösung oder Suspension singebracht und vermischt.

Weitere vorteilhafte Ausgestaltungen der vorliegenden Erfindung ergeben sich aus den Unteransprüchen.

Die Erfindung wird im Folgenden anhand des Ausführungsbeispiels näher erläutert.

### Beispiel

Auf der Grundlage einer "Farbstoffmischung 1" aus
1,5-2 g Solvent green 7 (8-Hydroxypyren-1,3,6-trisulfonsäure Trinatriumsalz)
64 g Wasser, dest.
0,2 g Mergal K15 (Konservierungsmittel, enthält 1,2-Benzolthiazolin-3-on Lithiumsalz + N'-Dodecyl-N-3-aminopropylglycin)
3 g Na₂CO₃
3 g Harnstoff (Feuchthaltemittel)
0,2 g NaOH
wurden folgende Ansätze hergestellt:
1. Farbstoffmischung 1 + 20 g Palatinose
2. Farbstoffmischung 1 + 20 g Isomalt (50 % 1,1-GPM, 50 % 1,6-GPS)
3. Farbstoffmischung 1 + 20 g Maltit
4. Farbstoffmischung 1 + 10 g Palatinose + 12,5 g Sorbitlösung (70 % Trockensubstanz)
5. Farbstoffmischung 1 + 20 g Isomalt (75 % 1,1-GPM, 25 % 1,6-GPS)
6. Farbstoffmischung 1 + 25 g Sorbitlösung (70 % Trockensubstanz) (Vergleichsmischung)
7. Farbstoffmischung 1 + 20 g Harnstoff (Vergleichsmischung)
8. Farbstoffmischung 1 + 20 g Maltose (entsprechend DE 40 20 900) (Vergleichsmischung)

Die Markierungstinten wurden sowohl auf Normalpapier als auch auf Thermofaxpapier aufgetragen. Die markierten Papiere wurden einem Test zur Lichtechtheit ausgesetzt.

Als Alkalien wurden eine Kombination von Soda und Natriumhydroxid eingesetzt.

### Ergebnisse:

1. Ansatz 1 zeigt eine besonders hohe Lichtechtheit und Leuchtkraft (Brillianz).
2. Ansätze 2, 3, 4 und 5 zeigen eine erheblich verbesserte Lichtechtheit gegenüber den Ansätzen 6, 7 und 8. Jedoch ist diese geringer als im Ansatz 1.

Um die Benetzbarkeit der Papieroberfläche durch die Markierungstinte zu verändern, kann der Farbstoffmischung 1 eine Menge von etwa 0,05 g eines Tensids (zum Beispiel Surfinol 465) zugegeben werden (Farbstoffmischung 2).

Die Farbstoffmischungen 1 und 2 ergeben gelbe Markierungstinten. Durch den Zusatz von zum Beispiel etwa 1 g Direkt blue 199 zu Farbstoffmischung 1 kann eine grün fluoreszierende Farbstoffmischung 3 erhalten werden, deren Lichtechtheit und Leuchtkraft sich analog zu den Ansätzen 1 - 8 beeinflussen lässt.

## Patentansprüche

1. Markierungsflüssigkeit umfassend Hydroxypyrentrisulfonsäure oder ein Derivat davon und mindestens einen Zucker oder Zuckeralkohol, ausgewählt aus der Gruppe bestehend aus Palatinose, Trehalose, Trehalulose, Maltit, 6-O-α-D-Glucopyranosyl-D-sorbit (1,6-GPS) und 1-O-α-D-Glucopyranosyl-D-mannit (1,1-GPM).

2. Markierungsflüssigkeit nach Anspruch 1, wobei die Markierungsflüssigkeit einen pH-Wert von 8 bis 14 aufweist.

3. Markierungsflüssigkeit nach einem der vorhergehenden Ansprüche, wobei die Markierungsflüssigkeit einen pH-Wert von 9 bis 10 aufweist.

4. Markierungsflüssigkeit nach einem der vorhergehenden Ansprüche, wobei die Markierungsflüssigkeit eine wässrige Lösung darstellt.

5. Markierungsflüssigkeit nach einem der vorhergehenden Ansprüche, wobei die Markierungsflüssigkeit ein Feuchthaltemittel, insbesondere Harnstoff, Glycole oder ein Diglycol, aufweist.

6. Markierungsflüssigkeit nach einem der vorhergehenden Ansprüche, wobei in der Markierungsflüssigkeit mindestens ein weiterer Farbstoff enthalten ist.

7. Markierungsflüssigkeit nach einem der vorhergehenden Ansprüche, wobei die Markierungsflüssigkeit mindestens ein Konservierungsmittel enthält.

8. Markierungsflüssigkeit nach einem der vorhergehenden Ansprüche, wobei das Konservierungsmittel ein Isothiazolinonderivat ist.

9. Markierungsflüssigkeit nach einem der vorhergehenden Ansprüche, wobei die Markierungsflüssigkeit mindestens eine Puffersubstanz enthält.

10. Märkierungsflüssigkeit nach einem der vorhergehenden Ansprüche, wobei die Puffersubstanz Trishydroxymethylaminomethan, Natriumcitrat, Natriumcarbonat und/oder Natriumhydroxyd ist.

11. Markierungsflüssigkeit nach einem der vorhergehenden Ansprüche, wobei die Markierungsflüssigkeit mindestens ein oberflächenaktives Agens aufweist.

12. Markierungsflüssigkeit nach einem der vorhergehenden Ansprüche, wobei die Markierungsflüssigkeit wenigstens ein wasserlösliches Bindemittel aufweist.

13. Markierungsflüssigkeit nach einem der vorhergehenden Ansprüche, wobei der Zuckeralkohol ein Gemisch aus 1,6-GPS und 1,1-GPM ist.

14. Markierungsflüssigkeit nach einem der vorhergehenden Ansprüche, wobei der Zucker oder Zuckeralkohol in einer Menge von 5 bis 50 Gew.-% bezogen auf das Gesamtgewicht der Markierungsflüssigkeit enthalten ist.

15. Markierungsflüssigkeit nach einem der vorhergehenden Ansprüche, wobei die Hydroxypyrentrisulfonsäure oder deren Derivat in einer Menge von 0,5 bis 8 Gew.-% bezogen auf das Gesamtgewicht der Markierungsflüssigkeit vorhanden ist.

16. Verfahren zur Herstellung einer Markierungsflüssigkeit umfassend Hydroxypyrentrisulfonsäure oder ein Derivat davon und mindestens einen Zucker oder Zuckeralkohol, ausgewählt aus der Gruppe bestehend aus Palatinose, Trehalose, Trehalulose, Maltit, 1,6-GPS und 1,1-GPM, wobei eine Farbstoffmischung umfassend die Hydroxypyrentrisulfonsäure oder deren Derivat in Wasser und gegebenenfalls alkalischem Puffer, gegebenenfalls Konservierungsmittel, gegebenenfalls Feuchthaltemittel und gegebenenfalls weiteren Zusatzstoffen hergestellt und mit dem mindestens einen Zucker oder Zuckeralkohol vermischt wird.

## Claims

1. A marking fluid comprising hydroxypyrenetrisulfonic acid or a derivative thereof and at least one sugar or sugar alcohol selected from the group consisting of palatinose, trehalose, trehalulose, maltite, 6-O-α-D-glucopyranosyl-D-sorbite (1,6-GPS) and 1-O-α-D-glucopyranosyl-D-mannite (1,1-GPM).

2. A marking fluid according to claim 1, wherein the marking fluid exhibits a pH of 8 to 14.

3. A marking fluid according to one of the previous claims, wherein the marking fluid exhibits a pH of 9 to 10.

4. A marking fluid according to one of the previous claims, wherein the marking fluid represents an aqueous fluid.

5. A marking fluid according to one of the previous claims, wherein the marking fluid exhibits a moistening agent, especially urea, glycols, or a diglycol.

6. A marking fluid according to one of the previous claims, wherein at least one additional dye is contained within the marking fluid.

7. A marking fluid according to one of the previous claims, wherein the marking fluid contains at least one preservative.

8. A marking fluid according to one of the previous claims, wherein the preservative is an isothiazolinone derivative.

9. A marking fluid according to one of the previous claims, wherein the marking fluid contains at least one buffer substance.

10. A marking fluid according to one of the previous claims, wherein the buffer substance is trishydroxymethylaminomethane, sodium citrate, sodium carbonate, and/or sodium hydroxide.

11. A marking fluid according to one of the previous claims, wherein the marking fluid exhibits at least one surface-active agent.

12. A marking fluid according to one of the previous claims, wherein the marking fluid exhibits at least one water-soluble binding agent.

13. A marking fluid according to one of the previous claims, wherein the sugar alcohol is a mixture of 1,6-GPS, and 1,1-GPM.

14. A marking fluid according to one of the previous claims, wherein the sugar or sugar alcohol is contained in a quantity of 5 to 50 % by weight, relative to the total weight of the marking fluid.

15. A marking fluid according to one of the previous claims, wherein the hydroxypyrenetrisulfonic acid or its derivative is present in a quantity of 0.5 to 8 % by weight, relative to the total weight of the marking fluid.

16. Method for the manufacture of a marking fluid comprising hydroxypyrenetrisulfonic acid, or a derivative thereof, and at least one sugar or sugar alcohol selected from the group consisting of palatinose, trehalose, trehalulose, maltite, 1,6-GPS, and 1,1-GPM, wherein a mixture of dyes comprising the hydroxypyrenetrisulfonic acid or its derivative is manufactured in water and, if necessary, alkaline buffer, preservative if necessary, moistening agent if necessary, and if necessary, additional additives, and mixed with the one sugar or sugar alcohol, at least.

## Revendications

1. Liquide de marquage comprenant de l'acide hydroxypyrène trisulfonique ou un dérivé de celui-ci et au moins un sucre ou sucre-alcool, choisi du groupe constitué de palatinose, tréhalose, tréhalulose, maltitol,
6-O-α-D-glucopyranosyl-D-sorbitol (1,6-GPS) et
1-O-α-D-glucopyranosyl-D-mannitol (1,1-GPM).

2. Liquide de marquage selon la revendication 1, ledit liquide de marquage ayant une valeur pH de 8 à 14.

3. Liquide de marquage selon l'une des revendications précédentes, ledit liquide de marquage ayant une valeur pH de 9 à 10.

4. Liquide de marquage selon l'une des revendications précédentes, ledit liquide de marquage présentant une solution aqueuse.

5. Liquide de marquage selon l'une des revendications précédentes, ledit liquide de marquage comportant un agent humectant, notamment de l'urée, des glycols ou un diglycol.

6. Liquide de marquage selon l'une des revendications précédentes, avec au moins un autre colorant étant contenu dans ledit liquide de marquage.

7. Liquide de marquage selon l'une des revendications précédentes, ledit liquide de marquage contenant au moins un agent conservateur.

8. Liquide de marquage selon l'une des revendications précédentes, dans lequel ledit agent conservateur est un dérivé de l'isothiazolinone.

9. Liquide de marquage selon l'une des revendications précédentes, ledit liquide de marquage contenant au moins une substance tampon.

10. Liquide de marquage selon l'une des revendications précédentes, dans lequel ladite substance tampon est tris-hydroxyméthyl-aminométhane, citrate de sodium, carbonate de sodium et/ou hydroxyde de sodium.

11. Liquide de marquage selon l'une des revendications précédentes, ledit liquide de marquage comportant au moins un agent de surface.

12. Liquide de marquage selon l'une des revendications précédentes, ledit liquide de marquage comportant au moins un liant soluble dans l'eau.

13. Liquide de marquage selon l'une des revendications précédentes, dans lequel ledit sucre-alcool est un mélange de 1,6-GPS et 1,1-GPM.

14. Liquide de marquage selon l'une des revendications précédentes, dans lequel ledit sucre ou sucre-alcool est contenu dans une quantité de 5 à 50 % en poids par rapport au poids total du liquide de marquage.

15. Liquide de marquage selon l'une des revendications précédentes, dans lequel l'acide hydroxypyrène trisulfonique ou son dérivé est présent dans une quantité de 0,5 à 8 % en poids par rapport au poids total du liquide de marquage.

16. Procédé pour produire un liquide de marquage comprenant de l'acide hydroxypyrène trisulfonique ou un dérivé de celui-ci et au moins un sucre ou sucre-alcool, choisi du groupe constitué de palatinose, tréhalose, tréhalulose, maltitol,1,6-GPS et 1,1-GPM, dans lequel un mélange de colorants comprenant l'acide hydroxypyrène trisulfonique ou son dérivé dans l'eau et, le cas échéant, du tampon alcalin, le cas échéant, des agents conservateur, le cas échéant, des agents humectant et, le cas échéant, d'autres additifs, est préparé et mélangé avec ledit au moins un sucre ou sucre-alcool.
